# EUROPÄISCHE PATENTANMELDUNG

(11) **EP 2 762 290 A1**
(43) Veröffentlichungstag der Anmeldung: **06.08.2014**
(21) Anmeldenummer: 14000263.5
(22) Anmeldetag: 24.01.2014
(51) Int. Cl.: B29C 45/72, B29C 45/73, B29C 45/78, B29C 35/00

(54) **Verfahren zur Temperierung eines Formwerkzeugs**

(30) Priorität: 04.02.2013 AT 792013
(71) Anmelder: ENGEL AUSTRIA GmbH, 4311 Schwertberg (AT)
(72) Erfinder: Raschke, Florian, 4694 Ohlsdorf (AT); Steinbichler, Georg, 8786 Rottenmann (AT)
(74) Vertreter: Gangl, Markus

(57) **Zusammenfassung**

Temperiervorrichtung (14) für ein Formwerkzeug (3) oder Komponenten einer formgebenden Arbeitsmaschine mit
- wenigstens einem Temperierzweig (2, 2'), welcher mit einem Vorlauf (5) verbunden ist,
- einem wenigstens eine Pumpe (13) umfassendes Pumpensystem zur Förderung von Temperiermedium im Vorlauf (5),

wobei wenigstens ein Sensor vorgesehen ist, durch den wenigstens eine der Größen aus der Gruppe Durchflussmenge und/oder Druck erfassbar ist und dass eine Steuer- oder Regeleinrichtung (1) zur Regelung oder Steuerung einer Förderleistung des Pumpensystems vorgesehen ist, welcher Signale des wenigstens einen Sensors zuführbar sind. Beschrieben wird auch ein Verfahren zum Betreiben einer solchen Vorrichtung.

## Beschreibung

Die vorliegende Erfindung betrifft eine Temperiervorrichtung für ein Formwerkzeug oder Komponenten einer formgebenden Arbeitsmaschine mit den Merkmalen des Oberbegriffs des Anspruchs 1 sowie ein Verfahren mit den Merkmalen des Anspruchs 10.

Die folgende Diskussion des Standes der Technik erfolgt beispielhaft anhand einer Spritzgussmaschine als Spezialfall einer formgebenden Arbeitsmaschine und anhand eines Spritzgießwerkzeugs einer solchen Spritzgussmaschine als Beispiel für ein Formwerkzeug einer allgemeinen formgebenden Arbeitsmaschine. Die Offenbarung der folgenden Anmeldung ist aber nicht auf diesen Spezialfall beschränkt.

Unter Temperieren wird in der vorliegenden Anmeldung Kühlen oder Heizen verstanden.

Beim Stand der Technik wird die wenigstens eine Pumpe mit konstanter Förderleistung betrieben. Entweder man verwendet die sich durch die Förderleistung (Fördermenge oder Druck usw.) und den hydraulischen Widerstand der wenigstens einen Zweigleitung ergebende Durchflussmenge oder man setzt Drosseln ein, um eine gewünschte niedrigere Durchflussmenge zu erzielen.

Daraus resultieren verschiedene Nachteile:
- ein konstant hoher Energieverbrauch,
- verringerte Lebensdauer des Pumpensystems,
- Kosten für die Rücktemperierung des Temperiermediums aufgrund eines zu hohen Volumenstroms,
- höhere Leckageanfälligkeit sowie
- unnötig hoher Druck im Temperiersystem.

Aufgabe der Erfindung ist es, die oben beschriebenen Nachteile zumindest teilweise aufzuheben.

Diese Aufgabe wird durch eine Temperiervorrichtung mit den Merkmalen des Anspruchs 1 und ein Verfahren mit den Merkmalen des Anspruchs 10 gelöst.

Durch die Erfindung kann die oben beschriebene im Stand der Technik zwingend erforderliche Drosselung reduziert werden oder sogar entfallen. Da der Energieverbrauch proportional dem Produkt aus Durchflussmenge und Druckverlust ist, wirkt sich ein Entfall der Drosselung positiv auf den Energieverbrauch aus.

Durchflusssensoren bzw. Drucksensoren bieten gegenüber Temperatursensoren erstens den Vorteil höherer Genauigkeit. Dies trifft vor allem über längere Zeiträume zu, da Temperatursensoren häufiger kalibriert werden müssen. Zweitens liefern Temperatursensoren keine Information über die strömungstechnischen Gegebenheiten, wie dies bei Durchflusssensoren und etwas indirekter bei Drucksensoren der Fall ist.

Vorteilhafte Ausführungsformen der Erfindung sind in den abhängigen Ansprüchen definiert.

Als Temperiermedium ist bevorzugt Wasser (gasförmig oder flüssig) oder Öl vorgesehen. Es können jedoch auch andere Fluide, wie beispielsweise Kohlendioxid oder Stickstoff, verwendet werden. Das Temperiermedium kann kontinuierlich oder pulsartig gefördert werden.

Besonders bevorzugt ist vorgesehen dass, die Temperiervorrichtung als Beistellvorrichtung für eine formgebende Arbeitsmaschine ausgebildet ist und einen oder mehrere Temperierzweige aufweist, Die Beistellvorrichtung kann entweder freistehend neben der formgebenden Arbeitsmaschine angeordnet sein oder an dieser verbaut sein.

Besonders bevorzugt sind wenigstens zwei Temperierzweige vorgesehen, welche vorzugsweise parallel geschaltet sind.

Um die Regelung oder Steuerung so gut wie möglich zu gestalten, kann in jedem der wenigstens zwei Temperierzweige wenigstens ein Sensor vorgesehen sein, durch den wenigstens eine der Größen aus der Gruppe Temperatur, Durchflussmenge, Druck, Wärmemenge, Temperaturdifferenz erfassbar ist, wobei Signale der Sensoren der Steuer- oder Regeleinrichtung zuführbar sind,

Am einfachsten kann die Regelung bzw. Steuerung der Pumpe gestaltet werden, indem diese über ihre Drehzahl geregelt oder gesteuert wird.

In dem Fall, dass das Pumpensystem mehr als eine Pumpe umfasst, kann es vorteilhaft sein, alternativ oder zusätzlich zur Regelung bzw. Steuerung der Pumpe(n) einzelne Pumpen des Pumpensystems abschaltbar und/oder zuschaltbar zu gestalten, Dadurch würde sich eine Art Stufensteuerung bzw. - regelung ergeben.

Zur individuellen Regelung der Durchflussmengen in den Temperierzweigen kann in diesen jeweils wenigstens eine Drosselvorrichtung vorgesehen sein. Die Drosselvorrichtung kann zum Beispiel manuell oder durch die Steuer- oder Regeleinrichtung einstellbar sein. Die Drosselvorrichtung kann zum Beispiel ein Durchflussventil sein, deren Durchflussgrad stufenlos einstellbar ist.

Schutz begehrt wird auch für eine formgebende Arbeitsmaschine insbesondere Spritzgießmaschine, Druckgussmaschine oder Pressmaschine, mit einer erfindungsgemäßen Temperiervorrichtung.

Des Weiteren wird Schutz begehrt für eine Anordnung mit wenigstens zwei formgebenden Arbeitsmaschinen und einer erfindungsgemäßen Temperiervorrichtung, wobei die Formwerkzeuge der wenigstens zwei formgebenden Arbeitsmaschinen seriell oder parallel durch die Temperiervorrichtung temperierbar sind.

Da dies besonders energieeffizient ist, kann es besonders bevorzugt vorgesehen sein, dass jeder Temperierzweig individuell gedrosselt wird, wobei wenigstens einer der Temperierzweige zumindest im Wesentlichen nicht gedrosselt wird. Durch die Anpassung der Förderleistung (Fördermenge oder Druck usw.) an den Durchflussbedarf dieses nicht gedrosselten Temperierzweigs, kann die Pumpe mit niedrigstmöglichem Energieaufwand laufen.

Die Steuer- oder Regeleinrichtung kann Bestandteil der Spritzgießmaschinensteuerung, einer externen Steuerung, Beistellvorrichtung oder eines zentralen Leitrechnersystems sein.

Das Pumpensystem kann Bestandteil der Spritzgießmaschine, einer Beistellvorrichtung oder einer zentralen Medienversorgung sein.

Weitere Vorteile und Einzelheiten der Erfindung ergeben sich anhand der Figuren sowie der dazugehörigen Figurenbeschreibung.

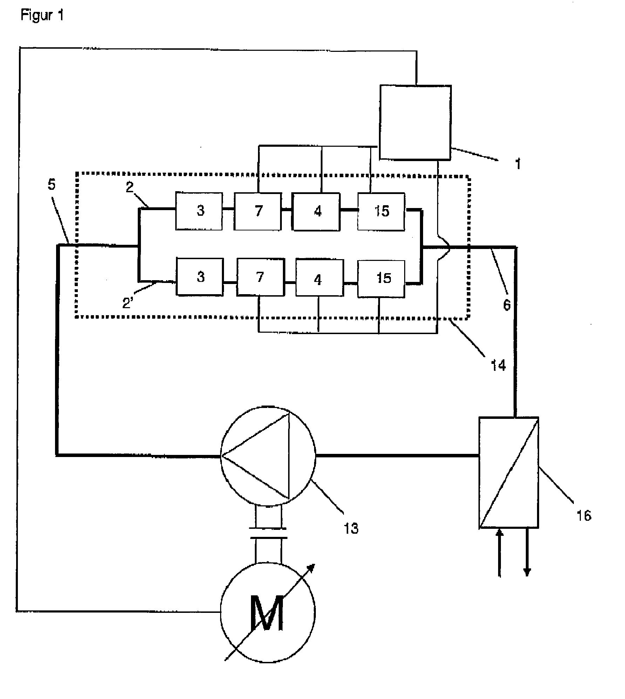

Dabei zeigt Figur 1 eine schematische Darstellung einer erfindungsgemäßen Temperiervorrichtung 14. Sie verfügt über zwei Temperierzweige 2, die durch ein Formwerkzeug 3 führen. In den Temperierzweigen 2 sind auch Durchflusssensoren 7, Temperatursensoren 4 sowie Durchflussventile 15 vorhanden. Die Durchflusssensoren 7 können natürlich auch als ein Bauteil zusammen mit den Durchflussventilen 15 ausgeführt sein. Des Weiteren ist eine Regel- oder Steuereinrichtung 1 vorgesehen - in diesem Ausführungsbeispiel eine Regeleinrichtung. Diese ist mit den Durchflusssensoren 7, den Temperatursensoren 4 sowie den Durchflussventilen 15 verbunden sind.

Die zwei Temperierzweige 2 sind jeweils mit dem Vorlauf 5 und dem Rücklauf 6 verbunden. Eine Pumpe 13 fördert Temperiermedium aus dem Rücklauf 6 in den Vorlauf 5. Des Weiteren ist im Rücklauf 6 ein optionaler Wärmetauscher 16 angeordnet. Auch die Pumpe 13 ist zur Regelung mit der Regeleinrichtung 1 verbunden.

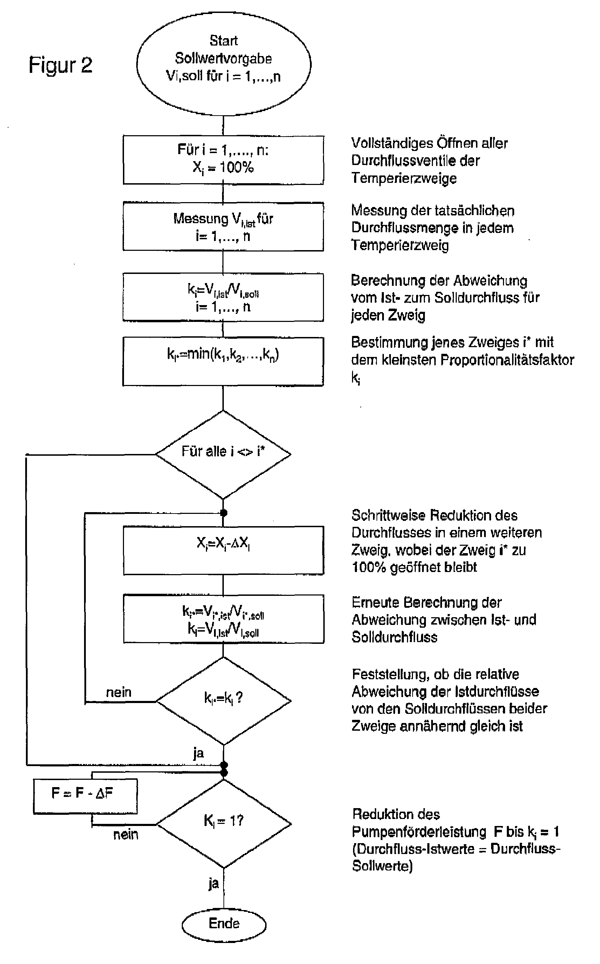

Figur 2 ist ein Flussdiagramm zur Verdeutlichung eines besonders bevorzugten Ausführungsbeispiels eines erfindungsgemäßen Verfahrens. Dabei bedeuten:
i ... Fortlaufende Nummer der Temperierzweige 2
n ... Anzahl der verwendeten Temperierzweige 2
Xi ... Stellgrad des Durchflussventils 15 im Temperierzweig i [%]
Vi ... Volumenstrom im Temperierkreis i
F ... Förderstrom Pumpensystem

Jener Temperierzweig i*, welcher zumindest annähernd zu 100 % geöffnet bleibt, kann einem Benutzer als für das Gesamtsystem bestimmender Zweig ("Flaschenhals") angezeigt werden. Dadurch hat der Benutzer die Möglichkeit den hydraulischen Widerstand dieses Temperierzweiges 2 zum Beispiel durch Entfernen von Schnellkupplungen oder Reduzierung von Schlauchlängen gezielt zu verringern. Dadurch kann der Förderstrom der Pumpe 13 weiter reduziert werden bei gleichzeitiger Öffnung der Durchflussventile 15 der weiteren Temperierzweige 2.

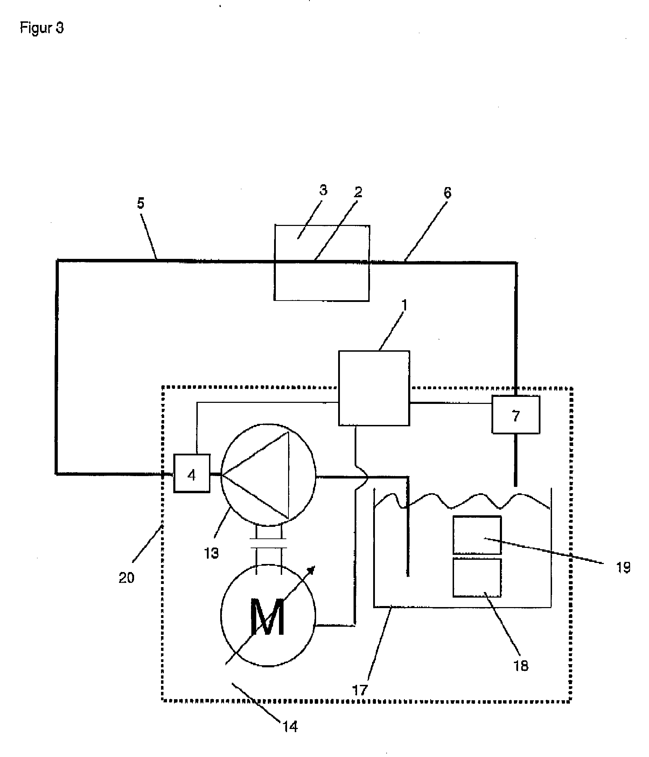

Im Unterschied zur Figur 1 ist in Figur 3 nur ein Temperierzweig 2 vorgesehen. Die Temperiervorrichtung 14 ist als Beistellvorrichtung ausgebildet. In einem gemeinsamen Gehäuse 20 sind angeordnet:
- Pumpe 13
- Durchflusssensor 7
- Tank 17 für Temperiermedium
- Heizung 18 zum Aufheizen des Temperiermediums im Tank 17
- Kühlung 19 zur Kühlung des Temperiermediums im Tank 17
- optional ein Temperatursensor 4 sowie
- eine Regel- oder Steuereinrichtung 1.

## Patentansprüche

1. Temperiervorrichtung (14) für ein Formwerkzeug (3) oder Komponenten einer formgebenden Arbeitsmaschine mit
- wenigstens einem Temperierzweig (2, 2'), welcher mit einem Vorlauf (5) verbunden ist,
- einem wenigstens eine Pumpe (13) umfassendes Pumpensystem zur Förderung von Temperiermedium im Vorlauf (5),
**dadurch gekennzeichnet, dass** wenigstens ein Sensor vorgesehen ist, durch den wenigstens eine der Größen Durchflussmenge und/oder Druck erfassbar ist und dass eine Steuer- oder Regeleinrichtung (1) zur Regelung oder Steuerung einer Förderleistung des Pumpensystems vorgesehen ist, welcher Signale des wenigstens einen Sensors zuführbar sind.

2. Temperiervorrichtung nach Anspruch 1, **dadurch gekennzeichnet, dass** wenigstens zwei Temperierzweige (2, 2') vorgesehen sind, welche vorzugsweise parallel geschaltet sind.

3. Temperiervorrichtung nach Anspruch 2, **dadurch gekennzeichnet, dass** in jedem der wenigstens zwei Temperierzweige (2, 2') wenigstens ein Sensor vorgesehen ist, durch den wenigstens eine der Größen Durchflussmenge und/oder Druck erfassbar ist, wobei Signale der Sensoren der Steuer- oder Regeleinrichtung (1) zuführbar sind.

4. Temperiervorrichtung nach einem der Ansprüche 1 bis 3, **dadurch gekennzeichnet, dass** zur Regelung- oder Steuerung der wenigstens einen Pumpe wenigstens eine Drehzahl der wenigstens einen Pumpe regel- oder steuerbar ist.

5. Temperiervorrichtung nach einem der Ansprüche 1 bis 4, **dadurch gekennzeichnet, dass** zur Regelung oder Steuerung des Pumpensystems Pumpen des Pumpensystems abschaltbar und/oder zuschaltbar sind.

6. Temperiervorrichtung nach einem der Ansprüche 1 bis 5, **dadurch gekennzeichnet, dass** die Temperiervorrichtung (14) als Beistellvorrichtung für eine formgebende Arbeitsmaschine ausgebildet ist und einen oder mehrere Temperierzweige (2, 2') aufweist.

7. Temperiervorrichtung nach einem der Ansprüche 1 bis 6, **dadurch gekennzeichnet, dass** in wenigstens einem der wenigstens einen Temperierzweige wenigstens eine Drosselvorrichtung vorgesehen ist.

8. Formgebende Arbeitsmaschine, insbesondere Spritzgießmaschine, Druckgussmaschine oder Pressmaschine, mit einer Temperiervorrichtung nach einem der Ansprüche 1 bis 7.

9. Anordnung mit wenigstens zwei formgebenden Arbeitsmaschinen und einer Temperiervorrichtung nach einem der Ansprüche 1 bis 7, wobei die Formwerkzeuge der wenigstens zwei formgebenden Arbeitsmaschinen seriell oder parallel durch die Temperiervorrichtung temperierbar sind.

10. Verfahren zur Temperierung eines Formwerkzeugs (3) oder Komponenten einer formgebenden Arbeitsmaschine, wobei durch ein mit einem wenigstens eine Pumpe umfassendes Pumpensystem Temperiermedium durch wenigstens einen Temperierzweig (2) gefördert wird, **dadurch gekennzeichnet, dass** wenigstens eine der Größen Durchflussmenge und/oder Druck erfassbar werden und dass die wenigstens eine Größe einer Steuer- oder Regeleinrichtung (1) zugeführt wird.

11. Verfahren nach Anspruch 10, **dadurch gekennzeichnet, dass** die Temperierung mittels wenigstens zweier Temperierzweige (2, 2') erfolgt, welche vorzugsweise parallel geschaltet sind.

12. Verfahren nach Anspruch 11, **dadurch gekennzeichnet, dass** in jedem der wenigstens zwei Temperierzweige (2, 2') wenigstens eine der Größen Durchflussmenge und/oder Druck erfasst werden und der Steuer- oder Regeleinrichtung (1) zugeführt wird.

13. Verfahren nach einem der Ansprüche 10 bis 12, **dadurch gekennzeichnet, dass** zur Regelung- oder Steuerung der wenigstens einen Pumpe (13) wenigstens eine Drehzahl der wenigstens einen Pumpe (13) geregelt oder gesteuert wird.

14. Verfahren nach einem der Ansprüche 10 bis 13, **dadurch gekennzeichnet, dass** zur Regelung oder Steuerung des Pumpensystems Pumpen (13) des Pumpensystems abgeschaltet und/oder zugeschaltet werden.

15. Verfahren nach einem der Ansprüche 10 bis 14, **dadurch gekennzeichnet, dass** das Temperiermedium in wenigstens einem der wenigstens einen Temperierzweige (2, 2') mittels einer Drosselvorrichtung gedrosselt wird.

16. Verfahren nach einem der Ansprüche 10 bis 15, **dadurch gekennzeichnet, dass** jeder Temperierzweig (2, 2') individuell gedrosselt wird, wobei wenigstens einer der Temperierzweige (2, 2') zumindest im Wesentlichen nicht gedrosselt wird.
